(19)

Europäisches
Patentamt

European
Patent Office

Office européen
des brevets

(11) **EP 3 686 548 B1**

(12) **EUROPEAN PATENT SPECIFICATION**

(45) Date of publication and mention
of the grant of the patent:
**27.10.2021 Bulletin 2021/43**

(21) Application number: **19153074.0**

(22) Date of filing: **22.01.2019**

(51) Int Cl.:
*G01B 11/12* *(2006.01)*    *G01B 11/10* *(2006.01)*
*B23Q 17/20* *(2006.01)*    *B23Q 17/22* *(2006.01)*
*B23Q 17/24* *(2006.01)*    *G05B 19/401* *(2006.01)*
*G01B 11/24* *(2006.01)*

(54) **METHOD AND ARRANGMENT FOR MEASURING DIAMETER OF WORKPIECE**

VERFAHREN UND ANORDNUNG ZUR MESSUNG DES DURCHMESSERS EINES WERKSTÜCKS

PROCÉDÉ ET AGENCEMENT DE MESURE DU DIAMÈTRE D'UNE PIÈCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.07.2020 Bulletin 2020/31**

(73) Proprietor: **AB Sandvik Coromant
811 81 Sandviken (SE)**

(72) Inventors:
• **WANG, Guoliang
17067 Solna (SE)**

• **HELGOSON, Martin
SE-811 39 Sandviken (SE)**

(74) Representative: **Sandvik
Sandvik Intellectual Property AB
811 81 Sandviken (SE)**

(56) References cited:
JP-A- H0 523 952       JP-A- 2014 008 588
US-A- 3 491 627        US-A1- 2003 088 991
US-A1- 2015 354 950

**Description**

TECHNICAL FIELD

The invention relates to a method and an arrangement for measuring the diameter of a workpiece structure. The invention also relates to a tool for use in such arrangement.

BACKGROUND ART

In the field of metal cutting, it may be beneficial to know the diameter of a workpiece or the diameter of a hole machined in a workpiece. For this purpose, various arrangements have previously been used for measuring the diameter, either before, during or after machining. Such arrangements are sometimes provided as separate measuring devices. EP1292805 discloses a measuring arrangement integrated in a cutting tool for measuring the diameter of a machined hole. The sensor is an optical sensor using interferometry to measure the distance from the axial center of the hole to an inner surface of the machined hole, i.e. corresponding to measurement of the hole radius (and thus diameter). Measuring the radius directly, from the axial center of the cutting tool, limits the applicability of the measuring arrangement. For example, the arrangement described in EP1292805 is not suitable for measurement on workpieces during a turning process and could not provide a measure of the external diameter of a workpiece. Furthermore, the arrangement requires mounting at the central axis of the tool and takes up a lot of space in this region, which is disadvantageous since it reduces the possibility to incorporate other components in this space.

US3491627 A discloses a cutting tool with three sensors arranged on a support above the workpiece to measure the diameter of the workpiece to be processed. JP H05 23952 A discloses a cutting tool comprising a distance measuring sensor, the sensor being arranged to measure the distance to the holder of the workpiece to be processed. JP 2014 008588 A describes a cutting tool with means for measuring the diameter of the workpiece to be processed. The cutting tool and the optical sensor are arranged on a rotatable turret. Either the cutting tool or the optical sensor are facing the workpiece.

SUMMARY

It is an object of the present invention to mitigate the shortcomings of the prior art and to provide a measuring arrangement that is better suited for measuring the diameter of a workpiece structure in various machining applications, wherein parts of the measuring device easily can be integrated into a tool, such as a cutting tool. The invention is defined in the appended claims.

Thus, according to a first aspect, the invention relates to a measuring arrangement for determining a diameter of a workpiece structure having a central axis. The measuring arrangement comprises a cutting tool including a cutting edge adapted to contact the workpiece structure, a distance measuring device arranged to the cutting tool for measuring a distance to a measurement point on a surface of the workpiece structure, and a processor operatively coupled to the distance measuring device for determining the diameter of the workpiece structure in a cross-section which extends through the measurement point and is perpendicular to the central axis. The cutting tool is arrangeable at a reference position in which the cutting edge is located at a known position in relation to an engagement point on the surface of the workpiece structure, and the distance measuring device is configured to measure the distance along a measurement direction from a measurement position to the measurement point on the surface. The measurement point is spaced from the engagement point in a circumferential direction of the surface, and the processor is configured to receive a distance measurement signal from the distance measuring device and determine the diameter on basis of the measured distance, the measurement direction, the reference position and the measurement position.

By using such arrangement, the diameter of many different workpiece structures can be determined, both outer diameters and inner diameters. For inner diameter measuring, this is possible even when the tool and/or the measuring device is not located at the center of the structure that is measured. The diameter is not measured directly, i.e. the measured distance does not correspond directly to the diameter. Nonetheless, by considering a known reference position and a known measurement position during measurement, it is possible to determine the diameter based on a single measured distance even though the measured distance does not correspond directly to the diameter.

A workpiece structure may refer to either a complete workpiece, such as a circular cylindrical workpiece machined in a turning process, or a part of a workpiece, such as a drilled hole in an otherwise non-cylindrical workpiece, or a sub-section of a rotated workpiece that may be circular cylindrical or comprised of various sections with different or changing diameters. However, the surface of the workpiece structure of which the diameter is to be measured has a circular, or substantially circular, shape in a cross-section perpendicular to the central axis of the workpiece structure. Throughout this specification, any references to a central axis and corresponding axial directions, circumferential directions and radial directions are made with respect to a workpiece structure for which a diameter is to be measured.

The reference position is a position of the cutting tool in relation to the workpiece structure. In particular, the reference position may be considered as the position of the cutting edge adapted to contact the workpiece structure with respect to an engagement point on the surface of the workpiece structure. The cutting edge may be an integral part of the tool, or it may be an edge of an insert arranged within a pocket in the tool, such as a cutting edge of a cutting insert arranged within a pocket of a cutting tool. Such cutting insert may be exchangeable, and may also be indexable, thus comprising multiple cutting edges. In such case, the position of the active cutting edge, i.e. the cutting edge which is currently indexed for machining a workpiece structure, may define the reference position. The workpiece may be a metal workpiece.

The measurement position is preferably different from the reference position. In other words, the position from which the distance is measured is different from the position of the cutting edge that is adapted to contact the workpiece structure. The measurement position may be defined in relation to the reference position and may be at least partly dependent thereof. For example, the measurement position may be placed at a fixed location in relation to the cutting edge such that the exact displacement of the measurement position from the reference position is known. In other words, the measurement position may be dependent on the reference position and directly ascertainable on the basis thereof.

The engagement point is to be understood as the point on the surface which is either engaged by the cutting edge, or, if the tool is in a retracted position with respect to the workpiece, the point that would be engaged by the cutting edge if the tool were to be moved from the retracted position into engagement with the workpiece structure. In other words, the reference position may correspond to a position of the tool in which the cutting edge contacts the workpiece, i.e. where the cutting edge engages the engagement point on the surface, or it may refer to a position in which the cutting edge is located at a known distance from the surface, e.g. in a retracted position, but ready for engagement, i.e. oriented in substantially a corresponding way as it would be if engaging the engagement point of the workpiece. In the former situation, which might, for example, correspond to on-line measurement during machining, the reference position would directly correspond to the location of the engagement point. In the latter situation, the reference position would correspond to the location of the engagement point plus the retracted distance.

The measuring direction is always different from the direction in which the tool is arranged to engage the workpiece at the engagement point, herein referred to as the "engagement direction". The engagement direction can be seen as the radial direction extending from the engagement point through the central axis of the workpiece structure, i.e. a direction passing through the engagement point and the central axis in a plane perpendicular to the central axis.

The measurement direction may be parallel to the engagement direction but could also be inclined with respect to the engagement direction. Such inclination may either be deliberate or the result of an imperfect mounting or alignment of the distance measuring device. In either case, the inclination can be taken into consideration when determining the diameter.

In general, the measurement direction does not pass through the central axis of the workpiece structure.

With respect to the central axis of the workpiece structure of which the diameter is to be determined, the distance measuring device may be located substantially at the same axial position as the cutting edge adapted to contact the workpiece structure, such that the diameter can be determined at the axial position engaged by the cutting edge. In other words, the engagement point may be located at substantially the same axial position as the measurement point (but spaced in the circumferential direction). This may be beneficial when machining a profiled workpiece having circular cross sections of different diameters at different axial locations, because it would ensure that the distance measured corresponds to the same diameter engaged by the cutting edge. However, it will be appreciated that it is also possible to measure the distance at a different axial location of the workpiece than the axial location engageable by the cutting edge. For example, if the tool is a cutting tool for turning, and measurement is performed during a turning operation, the distance may be measured axially forward of the cutting edge in the tool feed direction, i.e. on the not yet machined surface. Alternatively, the distance may be measured axially rearward of the cutting edge, in the tool feed direction, i.e. on the machined surface.

The circumferential spacing of the measurement point with respect to the engagement point can be in either direction with respect to the rotation of the workpiece and/or tool. For example, if assuming no axial displacement between the measurement point and the engagement point, and if the measurement point is circumferentially spaced in the rotation direction of a rotating workpiece, e.g. in a turning application, the measured distance would be to the machined surface (i.e. the same diameter as currently being machined). On the other hand, if instead the measurement point is spaced in the direction opposite to the rotation direction, the measured distance would correspond to the diameter of the not yet machined surface.

Hence, depending on how the distance measuring device is spaced from the cutting edge in the circumferential direction, and/or on whether the distance measuring device is spaced from the cutting edge in the axial direction, the measured distance may correspond to the diameter of the machined surface, i.e. the same diameter as machined by the cutting edge, or it may correspond to the diameter of the not yet machined surface (e.g. the surface machined in a previous pass in a turning application). In the latter case, the cutting depth (which is known) might be taken into consideration to compensate for the difference between the cut diameter and the diameter at the location where the distance is measured.

The processor may be arranged at the cutting tool, for example as part of an integrated microcontroller unit (MCU), or at a location in the vicinity of the cutting tool. The processor may also be arranged remotely from the cutting tool, such as, for example, in a computer, hand-held tablet, or other device accessible to an operator of the machine tool.

The processor may be operatively coupled to the distance measuring device by any kind of direct or indirect link therebetween, allowing sensor signals from the distance measuring device to be received at the processor. Such link may include a wired connection, which may be suitable for example when both the distance measuring device and the processor are arranged at, or close to, the cutting tool. Alternatively, such link may include a wireless connection, which may be suitable if the processor is arranged remotely from the cutting tool.

The measurement arrangement may comprise a computer that may be a part of, or at least operatively coupled to, a control system of the machine tool that controls the operation of the cutting tool. In this way, the processor may be given access to machining data that may be required for determining the diameter of the workpiece structure. Such machining data could for example relate to a reference position of the cutting tool. Furthermore, the control system may be configured to adapt the machine control based on the diameter of the workpiece structure as determined by the measurement arrangement.

It will be appreciated that the measurement arrangement may comprise both a processor located at the cutting tool, for example in a MCU, and a remotely located computer. In this case, the MCU may be used for certain operations, such as sampling of sensor signals from the distance measuring device and possibly also determining a diameter of the workpiece structure, and the remotely located computer may be used for other operations, such as collecting, compiling, and/or post-processing of determined diameters.

The measurement arrangement may comprise a memory operatively coupled to the processor for storing and making available to the processor any parameters that are required for determining the diameter. Such parameters may be parameters characterizing the measurement direction and/or the measurement position in relation to a reference position.

The diameter of the workpiece structure may be determined by using trigonometry. The diameter may be calculated by applying well-known trigonometric relations to the measured distance, the measurement position, the reference position and the measurement direction. Such trigonometric relations may be the Pythagorean theorem and any trigonometric identities related thereto. For example, the diameter may be readily calculated by using such well-known trigonometric relations in view of the distance measured by the distance measuring device and the direction in which the distance is measured, as well as the reference position and the distance between the reference position and the measurement position in two orthogonal directions in the cross-section being measured.

The distance measuring device should have a measurement resolution that is good enough for determining the diameter with sufficient accuracy.

The distance measuring device may comprise an optical sensor. Thus, light reflected from the surface of the workpiece structure may be received at a light receiving element of the optical sensor, producing sensor signals corresponding to the distance to the surface. The light that is detected by the optical sensor may be diffusively reflected light from the surface of the workpiece structure.

The optical sensor may be an optical triangulation sensor, such as a laser triangulation sensor. Using such sensor, the focus position of diffusively reflected light from the surface of the workpiece structure may be detected on a light receiving element via an optical system. The focus position may be expressed as a distance from the measurement position to the surface of the workpiece structure. An optical triangulation sensor is suitable since it has a good measurement resolution, even when measuring to a surface that is inclined with respect to the measurement direction.

The distance measuring device may comprise an optical fiber bundle of which one end is arranged at the measurement position for conveying light to and from the optical sensor. Thereby, the optical sensor may be arranged at a more remote location.

The measurement arrangement may comprise a display for indicating to a user the diameter of the workpiece structure and/or characteristics of the workpiece or machining process determined therefrom. The display may for example be arranged remotely from the cutting tool and easily accessible to a machine operator monitoring the machining process. The display may be operatively coupled to the processor such that determined diameter values and any processed data can be indicated or visualized on the display. The display may be part of a stand-alone computer, e.g. a desktop computer or hand-held tablet, or a computer being part of, or connected to, the machine tool control system.

The distance measuring device is arranged to the cutting tool. Thus, a cutting tool is provided for use in a measuring arrangement for determining the diameter of a workpiece structure, wherein the cutting tool comprises a distance measuring device. The cutting tool further comprises a cutting edge adapted to contact a workpiece structure, or a pocket for accommodating an insert having such cutting edge. The distance measuring device is preferably arranged at a position that is spaced from the cutting edge or pocket.

The distance measuring device may be fixedly arranged to the tool, e.g. permanently or removably mounted to, or integrally formed with, the tool. The distance measuring device may for example be partly located within a cavity of the tool, and partly exposed to the exterior of the tool.

By arranging the distance measuring device to the tool, the measurement position will always be fixed at a known position in relation to the cutting edge. Hence, the exact relationship between the measurement position and the reference position, which is an important measure for accurate determination of the diameter, is well-defined. Accordingly, such arrangement will facilitate accurate and repeatably reliable measurements.

The measurement arrangement may comprise an antenna or other means for transmitting sensor signals from the distance measuring device to a remotely located computer, or for transmitting diameter values as determined in a processor arranged locally at the tool to a remotely located computer. Thus, data may be wirelessly transmitted from the tool and such data may be either raw data originating from the distance measuring device, or processed data, such as determined diameter values or other characteristics determined on the basis thereof. The measuring arrangement may comprise a plurality of distance measuring devices that are spaced from the reference position in different directions. For example, a secondary distance measurement device may be arranged such that a measurement point thereof is circumferentially spaced from the engagement point in a different direction compared to the measurement point of the original distance measuring device. Using multiple distance measuring devices in this way may increase the accuracy, for example by calculating a mean value of the diameter values determined by the different distance measuring devices.

Another possibility is to use an additional distance measuring device that measures the distance in the engagement direction. By using such additional distance measuring device, the reference position could be directly measured, without requiring that the cutting edge is in contact with the workpiece structure or that a retraction distance is known.

According to another aspect of the invention, a method is provided for determining a diameter of a workpiece structure having a central axis. The method comprises the steps of:

- arranging a cutting tool at a reference position in which a cutting edge, adapted to contact the workpiece structure, of the cutting tool is located at a known position in relation to an engagement point on a surface of the workpiece structure,
- measuring the distance along a measurement direction from a measurement position to a measurement point on the surface, wherein the measurement position is located at the cutting tool and fixed at a known position in relation to the cutting edge, and wherein the measurement point is spaced from the engagement point in a circumferential direction of the surface,
- determining the diameter of the workpiece structure in a cross-section extending through the measurement point perpendicular to the central axis, wherein the diameter is determined on the basis of the measured distance, the measurement direction, the reference position and the measurement position.

The distance may be measured continuously or repeatedly during movement of the tool in relation to the surface of the workpiece structure. A diameter may be determined with respect to each of all the measured distances, or with respect to a sub-set of the measured distances.

For example, the internal diameter of a drilled hole may be measured at various locations using a distance measuring device arranged at the drill when the drill is retracted from the hole. In this way, variations in the drilled diameter could be identified, such as conicity of the hole caused by tool deflection.

The reference position may correspond to a position in which the cutting edge is in engagement with the engagement point on the surface of the workpiece structure, i.e. such that the reference position corresponds to the engagement point. This would be the case if measuring the diameter during machining, for example during a turning operation using a distance measuring device arranged at the turning tool. The determined distance may be used as feedback to a control system of the machine tool to guide the machining process, i.e. to facilitate machining a specific diameter of a workpiece structure.

The reference position may also correspond to a retracted position of the tool in which the cutting tool has been retracted a retraction distance from a position in which the cutting edge was in engagement with the surface of the workpiece structure.

The distance may be measured in a period between two consecutive cutting operations on the workpiece structure.

For example, the diameter may be determined in the period between two turning passes, i.e. when the turning tool has been retracted a certain retraction distance and is brought back to the starting position. Thus, the resulting diameter that was cut in the previous pass can be determined. The diameter may be determined continuously or repeatedly when the cutting tool is returned to the starting position. Thereby, any differences or anomalies of the diameter along the surface of the workpiece structure can be identified.

The distance may be measured when the workpiece structure rotates about the central axis. Thereby, multiple diameter values may be determined based on distances measured to different points on the surface in the same cross section of the workpiece structure. By analyzing differences in the diameters thus determined, various conditions can be identified. For example, wobbling of the workpiece structure and/or vibrations may be identified based on a plurality of diameter values determined during rotation of the workpiece structure.

For example, assuming a perfectly symmetrical workpiece having a circular cross-sectional shape at all cross sections perpendicular to the workpiece central axis, any differences in the sensor signal when measuring during rotation of the workpiece is the results of workpiece wobbling (e.g. due to the workpiece not being mounted correctly in the machine) and/or vibrations in some part of the system.

Another characteristic that may be identified is deflection of the cutting tool. When a tool is deflected due to cutting forces acting on the tool, the measurement direction may change (if the distance measurement device is arranged at the cutting tool). Therefore, such tool deflection may be falsely identified by the measurement arrangement as a change in diameter of the workpiece structure. But if measuring the diameter repeatedly when moving the cutting tool into engagement with the workpiece structure, the instantaneous change of the diameter as detected by the measuring arrangement when the cutting edge of the tool contacts the workpiece structure can be used as a measure of the tool deflection. In other words, the instantaneous change in the measured distance, which is not caused by an actual changed diameter but by deflection of the tool, can be analyzed to determine the tool deflection. This tool deflection may be taken into consideration in subsequent diameter measurements during machining.

According to another aspect of the invention, a computer program is provided which comprises computer-executable instructions which, when executed by a computer of the measuring arrangement, causes a method for determining a diameter of a workpiece structure to be performed.

The computer, by which the computer program instructions are executed, may be part of, or operatively coupled to, the control system of the machine tool. Hence, by execution of the computer program, instructions may be initiated to arrange the tool at the reference position, measure distance and determine the diameter according to a method as described above. As an example, execution of the computer program may first cause positioning of the tool and/or the workpiece such that the tool assumes a reference position with respect to the workpiece structure. Then, the computer program instructions may cause a distance measuring device to measure a distance to the workpiece structure. If sensor signals from the distance measuring device are received at the computer by which the computer program was executed, the step of determining the diameter may be performed at the computer. Alternatively, execution of the computer program instructions may initiate calculation of the diameter at another processor. For example, execution of the computer program may cause corresponding instructions to be sent to an MCU arranged at the tool, such that the diameter is determined using the processor of the MCU. If both the data collection and the determining of diameter is performed at an MCU arranged at the tool, the computer program instructions sent to the MCU may be accompanied by process parameters and other data that is required for the calculations.

BRIEF DESCRIPTION OF DRAWINGS

In the following, example embodiments will be described in greater detail and with reference to the accompanying drawings, in which

Fig. 1 illustrates a measuring arrangement according to an embodiment of the invention, used for measuring the diameter of a workpiece during turning;
Fig. 2 illustrates a measuring arrangement used for measuring the internal diameter of a workpiece during turning;
Figs. 3A-3D illustrate a measuring arrangement wherein the cutting tool is in a retracted position with respect to the workpiece;
Fig. 4 is a flowchart illustrating a method according to the invention for determining a diameter of a workpiece structure.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

DETAILED DESCRIPTION OF EMBODIMENTS

In the example embodiments described hereinunder, the invention is described with reference to a cutting tool, i.e. wherein the edge defining the reference position is a cutting edge of the cutting tool.

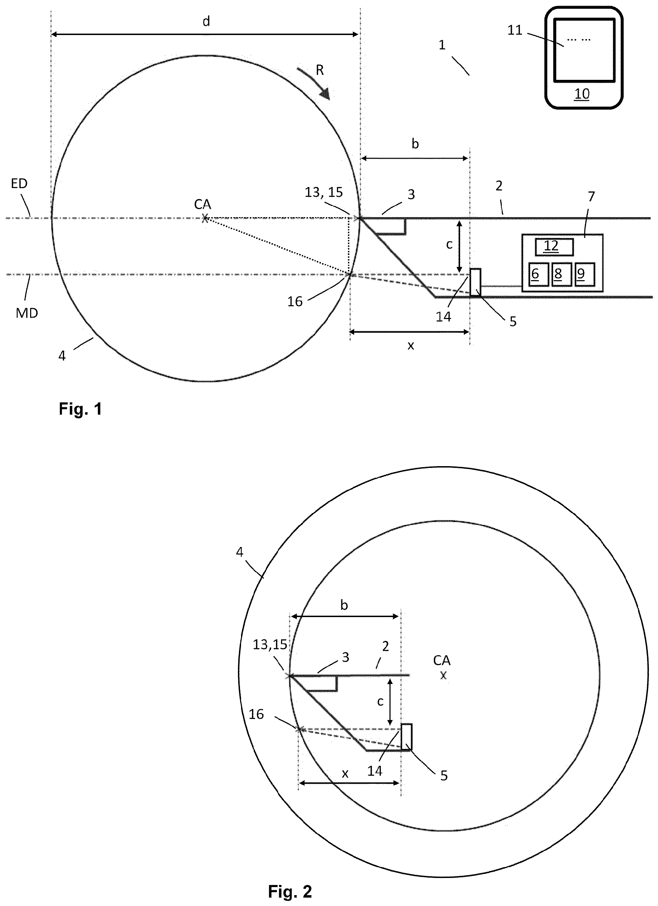

Fig. 1 is a schematic drawing of a measuring arrangement 1 comprising a cutting tool 2 having a cutting insert 3 with a cutting edge engaging a workpiece 4 shown in a cross section in a plane perpendicular to a central axis CA of the workpiece. Although not shown in the drawing, the workpiece 4 and the cutting tool 2 is mounted to a spindle and to a tool post, respectively, of a machine tool, for example a computer numerical controlled (CNC) Turning Center or Lathe Machine. The workpiece is rotatable in a rotation direction R around a rotation axis corresponding to the central axis CA. The measuring arrangement comprises a distance measuring device 5 in the form of a laser triangulation sensor, arranged at the turning tool. The sensor 5 is arranged in a recess of the turning tool and is partly exposed to the exterior of the tool, such that no part of the tool blocks the line of sight for the transmitted and reflected laser beams, indicated by dashed lines in fig. 1.

The triangulation sensor detects the distance to a surface by detecting the angle between a transmitted laser beam and the beam reflected from the surface. This angle depends on the distance between sensor and surface and is detected by identifying the location of the reflected light on a light receiving element (not shown), e.g. consisting of an array of photodiodes. In practice, the diffusively reflected light will be focused at the light receiving element and the intensity peak can be identified to accurately determine the angle, and thus the distance. Even though different kinds of distance measuring devices can be used, a laser triangulation sensor is beneficial since it provides reliable measurements even when measuring distance to an inclined surface (which is the case with a setup as shown in fig. 1). The principles of an optical triangulation sensor are well-known to a person skilled in the art and will not be described in further detail herein.

The cutting edge engages the surface of the workpiece 4 at an engagement point 15 in an engagement direction ED. The engagement direction ED is simply the radial direction in which the cutting edge engages the workpiece, i.e. a direction extending from the engagement point and through the central axis CA in the cross-section shown. The location of the part of the cutting insert 3 that is adapted to engage the engagement point, i.e. the cutting edge, defines a reference position 13. Hence, in this case, where the cutting tool is in engagement with the workpiece, the reference position 13 corresponds to the engagement point 15. The laser triangulation sensor 5 is arranged at the same axial position as the cutting edge, and is configured to measure the distance x from a measurement position 14 to a measurement point 16 at the surface of the workpiece along a measurement direction MD, such that the engagement point 15 and the measurement point 16 are located substantially at the same axial position of the surface, i.e. located in the same cross section of the workpiece, but spaced in the circumferential (rotational) direction R.

Since the measurement point 16 is located rotationally forward of the engagement point 15, the distance x that is measured corresponds to the diameter cut by the cutting edge.

In the example embodiment shown in fig. 1, the measurement direction MD is parallel to the engagement direction ED. With such setup, the circumferential spacing between the engagement point 15 and the measurement point 16 corresponds to a distance c between the measurement position 14 and the reference position 13 in a vertical direction of the cross section in fig. 1. The measurement position is spaced from the reference position also in a horizontal direction of the cross section in fig. 1, by a distance b.

Hence, when the sensor is fixedly arranged at the cutting tool, the measurement position 14 depends entirely on the reference position 13 and the known location of the sensor 5 in relation thereto, in this example characterized by the distances b and c.

The distance b should exceed the minimum distance measurable by the sensor to ensure accurate measurements not only when measuring with the tool in a retracted position, but also when measuring during machining, as in fig. 1. The distance c should be as great as possible, but smaller than the smallest workpiece structure radius that is to be measured. In other words, if the distance c is too great, the workpiece structures that can be measured would be limited to structures having relatively large diameter. On the other hand, the greater the distance c is, the better the measurement accuracy will be.

With a setup according to fig. 1, and using trigonometric relations (the Pythagorean theorem; the triangle indicated with dotted lines in fig. 1), i.e.,

$$\left(\frac{d}{2}\right)^2 = c^2 + \left(\frac{d}{2} - (x - b)\right)^2$$

the diameter d is calculated as

$$d = \frac{c^2 + (x - b)^2}{x - b}$$

Hence, when measuring during machining, the only reference position information that is required is that the cutting tool is in engagement with the workpiece, and the actual spatial position is not relevant.

If the measurement direction MD is not parallel to the engagement direction ED, e.g. if the sensor 5 is inclined such that the transmitted laser beam is non-parallel to the engagement direction, this must be taken into consideration. Hence, if the measurement direction is tilted by an angle $\sigma$ in the vertical plane in fig. 1, i.e. in the plane of the cross section shown, and/or tilted by an angle $\beta$ in the horizontal plane in fig. 1, i.e. in the plane parallel to the central axis and the engagement direction, the diameter is calculated as

$$d = \frac{h^2 + (s-k)^2}{s-k}$$

wherein

$$k = b * cos\beta$$

$$s = x * cos\sigma * cos\beta$$

$$h = c + x * sin\sigma$$

In this formula, the angle $\sigma$ is positive for tilt in a counterclockwise direction (i.e. tilt in the opposite direction to the rotation direction R) whereas the direction of the tilt in the horizontal plane (i.e. the sign of $\beta$) does not affect the calculations.

The measurement arrangement 1 also comprises a processor 6 at which signals from the sensor 5 are received and processed for determining a diameter. In fig. 1, the processor 6 is part of a microcontroller unit (MCU) 7 embedded in the cutting tool 2 and connected to the sensor 5. The MCU also comprises a memory 8 and an antenna 9 for transmitting and/or receiving data to/from an external computer 10, in this case illustrated as a hand-held tablet comprising a display 11. The external computer 10 may also be connected to the cloud or a remote server, potentially facilitating even more elaborate analytics or control of the machining process based on data collected by the measuring arrangement.

The MCU 7 and the sensor 5 is powered by a battery 12 which may be exchangeable and/or rechargeable, e.g. by inductive charging. Power may also be supplied to the MCU and the sensor using other means, for example based on energy harvesting.

The memory 8 stores data required for the calculation of the diameter, such as the distances c and b and information regarding the orientation of the sensor, e.g. the angles $\sigma$ and $\beta$ described above, that defines the measurement position in relation to the reference position and the measurement direction MD in relation to the engagement direction ED. Information regarding a retraction distance may also be stored in the memory, e.g. the distance that the cutting tool is retracted when moving out of engagement from the workpiece for returning to the start position before a subsequent pass. However, the retraction distance and other information required for determining the diameter may also be made available to the processor 6 by other means, for example transmitted from a machine control system to the MCU 7. As an example, the external computer 10 may be communicatively coupled to the control system of the machine tool that controls the movements of the cutting tool and may relay to the MCU 7 any information from the control system that is required for calculating the diameter. Such information may relate to the relative position between the cutting tool and the workpiece, for example whether the cutting tool is in a retracted state or not.

Fig. 2 schematically shows a similar measuring arrangement as in Fig. 1 but applied for measuring inner diameter of a workpiece during an internal turning process. Similar features have the same reference numerals as in fig. 1. For clarity, some features of the measurement arrangement have been omitted in fig. 2. The main difference in view of the setup according to fig. 1 is that the measured distance x is smaller than the distance b between the measurement position 14 and the reference position 13 in the horizontal direction of the cross section. By considering the absolute value of the difference between b and x, a similar formula as defined for determining external diameters is applicable, i.e.

$$d = \frac{c^2 + (x-b)^2}{|x-b|}$$

Hence, this formula is applicable both for determining inner and outer diameters.

A similar arrangement and a corresponding analysis is applicable for measuring diameters of a machined hole, for example with a distance measuring device embedded in a cutting tool such as a drilling, milling or boring tool, for machining the inner surface of a hole in a workpiece. Even though the internal diameter of a drilled hole could be determined by measuring the distance in a radial direction, this might sometimes be a disadvantage because it may be difficult to arrange the sensor at the tool central axis (i.e. the rotation axis of the tool) since other components of the tool, for example coolant channels in a drill, or a movable tool slide in a boring tool, might occupy this space. Then it would be beneficial to arrange the distance measuring device displaced from the central axis, which is made possible by the present invention.

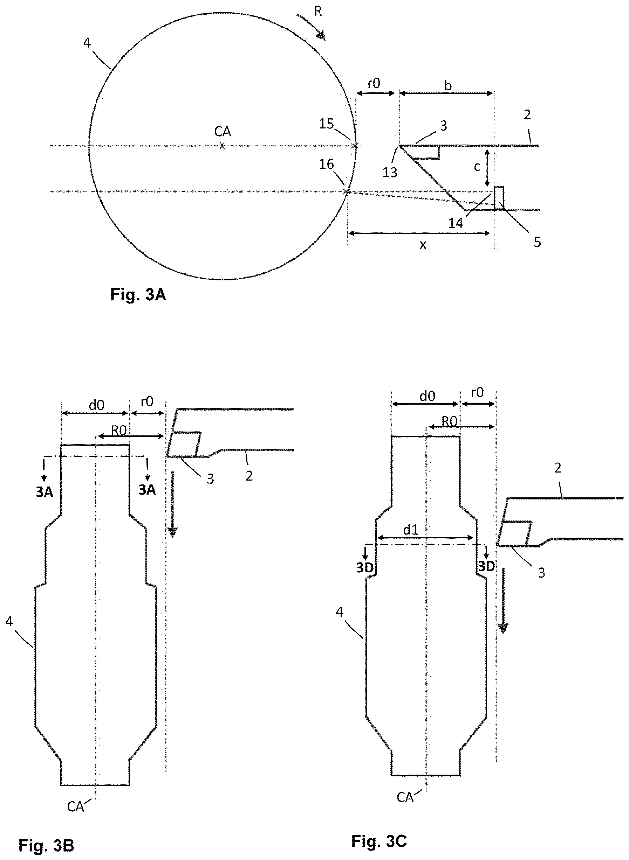

Fig. 3a illustrates a measuring arrangement as in the previous embodiments, but where the cutting tool is in a retracted position, for example after having finished a first pass and about to return to the start position for a second pass. The retraction distance r0 now defines the reference position 13 of the cutting tool.

Hence, according to similar calculations as discussed previously, the diameter is now determined as

$$d = \frac{c^2 + (x - (b + r0))^2}{|x - (b + r0)|}$$

Preferably, the retraction distance r0 is known, e.g. as specified by the control system, e.g. the computer numerical control (CNC) system, of the machine tool controlling the machining process. For example, the retraction distance r0 may be transmitted to the measurement arrangement from the CNC or a computer connected thereto, for storage in the memory and/or made available to the processor for determining the diameter, as described above.

Fig. 3b shows the same arrangement but in a top view, i.e. in a horizontal plane of fig. 3a, parallel to the central axis of the workpiece. For clarity, the sensor 5 and some other components of the measuring arrangement have been left out in the drawing. Figure 3b shows the cutting tool after being retracted from the workpiece, just before returning to the start position for a subsequent pass. If the retraction distance r0 is known, as well as a reference diameter d0 which is the diameter at the location where the tool was retracted (i.e. at the location corresponding to figures 3a and 3b), it is possible to determine any variations from this diameter when the tool is moved along the periphery of the workpiece.

Preferably, the distance x is continuously measured in the period when the tool is brought back to the start position. Then, at each axial position of the workpiece, the diameter is calculated as

$$d = 2\sqrt{c^2 + (R0 - x)^2}$$

Where R0 is defined as half the reference diameter (that is, the radius of the workpiece at the location where the tool was first retracted) plus the retraction distance, i.e. $R0 = \frac{d0}{2} + r0$ .

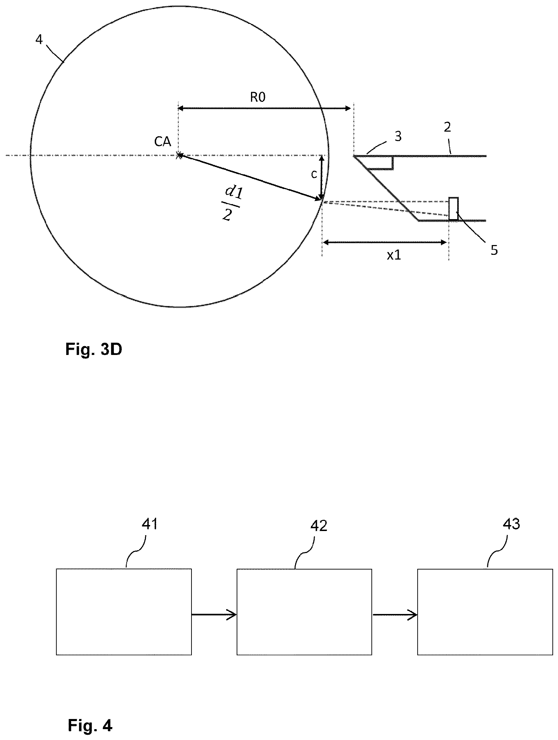

For example, with reference to figs. 3c and 3d, at the tool location shown, the diameter d1 is determined on the basis of a measured distance x1 and the known values of c and R0, using the formula above.

Any inclination of the measurement direction can be taken into consideration in a similar way as discussed previously with reference to fig. 1. For example, if the measurement direction is tilted by an angle $\sigma$ in the vertical plane in fig. 3a and 3d, i.e. in the plane of the cross sections shown, the diameter is calculated as

$$d = 2\sqrt{c^2 + x^2 + R0^2 + 2cx \sin \sigma - 2R0x \cos \sigma}$$

wherein the angle $\sigma$ is positive for tilt in a counterclockwise direction (i.e. tilt in the opposite direction to the rotation direction R shown in fig. 3a).

Fig. 4 is a flowchart of a method for determining a diameter according to the invention.

In step 41, a cutting tool is arranged at a reference position in which a cutting edge of the cutting tool is located at a known position in relation to an engagement point on a surface of the workpiece structure.

In step 42, the distance along a measurement direction from a measurement position to a measurement point on the surface is measured, wherein the measurement point is spaced from the engagement point in a circumferential direction of the surface.

In step 43, the diameter of the workpiece structure is determined in a cross-section extending through the measurement point perpendicular to the central axis. The diameter is determined on the basis of the measured distance, the measurement direction, the reference position and the measurement position.

**Claims**

1. A measuring arrangement (1) for determining a diameter (d) of a workpiece structure (4) having a central axis (CA), the measuring arrangement comprising

- a cutting tool (2) including a cutting edge adapted to contact the workpiece structure,
- a distance measuring device (5) arranged to the cutting tool for measuring a distance (x) to a measurement point (16) on a surface of the workpiece structure (4), and
- a processor (6) operatively coupled to the distance measuring device (5) for determining the diameter (d) of the workpiece structure (4) in a cross-section which extends through the measurement point (16) and is perpendicular to the central axis (CA),

wherein the cutting tool (2) is arrangeable at a reference position (13) in which the cutting edge is located at a known position in relation to an engagement point (15) on the surface of the workpiece structure (4), and the distance measuring device (5) is configured to measure the distance (x) along a measurement direction (MD) from a measurement position (14) to the measurement point (16) on the surface, **characterized in that** the measurement point (16) is spaced from the engagement point (15) in a circumferential direction of the surface, and wherein the processor (6) is configured to receive a distance measurement signal from the distance measuring device (5) and determine the diameter on basis of the measured distance (x), the measurement direction (MD), the reference position (13) and the measurement position (14).

2. A measuring arrangement according to claim 1, wherein the distance measuring device comprises an optical sensor.

3. A measuring arrangement according to claim 2, wherein the optical sensor is an optical triangulation sensor.

4. A measuring arrangement according to any of the claims 2 or 3, wherein the distance measuring device further comprises an optical fiber bundle of which one end is arranged at the measurement position for conveying light to and from the optical sensor.

5. A measuring arrangement according to any of the previous claims, further comprising a display for indicating to a user the diameter of the workpiece structure and/or characteristics of the workpiece or machining process determined therefrom.

6. A measuring arrangement according to any of the previous claims, further comprising a computer that is part of, or operatively coupled to, a control system of a machine tool that controls the operation of the cutting tool.

7. A method for determining a diameter (d) of a workpiece structure (4) having a central axis (CA), using a measuring arrangement as defined in any of the previous claims, the method comprising the steps of:

   - arranging the cutting tool (2) at a reference position (13) in which a cutting edge, adapted to contact the workpiece structure, of the cutting tool is located at a known position in relation to an engagement point (15) on a surface of the workpiece structure,
   - measuring the distance (x) along a measurement direction (MD) from a measurement position (14) to a measurement point (16) on the surface, wherein the measurement position is located at the cutting tool and fixed at a known position in relation to the cutting edge, and wherein the measurement point (16) is spaced from the engagement point (15) in a circumferential direction of the surface,
   - determining the diameter (d) of the workpiece structure (4) in a cross-section extending through the measurement point (16) perpendicular to the central axis (CA), wherein the diameter (d) is determined on the basis of the measured distance (x), the measurement direction (MD), the reference position (13) and the measurement position (14).

8. A method according to claim 7, wherein the distance is measured continuously or repeatedly during movement of the cutting tool in relation to the surface of the workpiece structure, and the diameter is determined with respect to each of, or a sub-set of, the measured distances.

9. A method according to any of the claims 7 or 8, wherein the reference position corresponds to a position in which the cutting edge is in engagement with the engagement point on the surface of the workpiece structure.

10. A method according to claim 7 or 8, wherein the reference position corresponds to a retracted position of the cutting tool, in which the cutting tool has been retracted a retraction distance from a position in which the cutting edge was in engagement with the surface of the workpiece structure.

11. A method according to claim 10, wherein the distance is measured in a period between two consecutive cutting operations on the workpiece structure.

12. A method according to any of the claims 7-11, wherein the distance is measured when the workpiece structure rotates about the central axis.

13. A method according to claim 12, comprising the step of determining wobbling of the workpiece structure and/or vibrations from a plurality of diameter values determined during rotation of the workpiece structure.

14. A computer program comprising computer-executable instructions which, when executed by the computer of the measuring arrangement according to claim 6, causes a method according to any of the claims 7-13 to be performed.

**Patentansprüche**

1. Messanordnung (1) zur Bestimmung eines Durchmessers (d) einer Werkstückstruktur (4) mit einer zentralen Achse (CA), wobei die Messanordnung Folgendes aufweist:

- ein Schneidwerkzeug (2) mit einer Schneidkante, welche dazu geeignet ist, die Werkstückstruktur zu berühren,
- eine an dem Schneidwerkzeug angeordnete Abstandsmesseinrichtung (5) zum Messen eines Abstands (x) zu einem Messpunkt (16) auf einer Oberfläche der Werkstückstruktur (4), und
- einen mit der Abstandsmesseinrichtung (5) operativ gekoppelten Prozessor (6) zur Bestimmung des Durchmessers (d) der Werkstückstruktur (4) in einem durch den Messpunkt (16) verlaufenden, senkrecht zur Mittelachse (CA) stehenden Querschnitt,

wobei das Schneidwerkzeug (2) in einer Referenzposition (13) anordenbar ist, in der sich die Schneidkante an einer bekannten Position in Bezug auf einen Anschlagpunkt (15) auf der Oberfläche der Werkstückstruktur (4) befindet, und wobei die Abstandsmesseinrichtung (5) konfiguriert ist, um den Abstand (x) entlang einer Messrichtung (MD) von einer Messposition (14) zu dem Messpunkt (16) auf der Oberfläche zu messen, **dadurch gekennzeichnet, dass** der Messpunkt (16) in einer Umfangsrichtung der Oberfläche von dem Anschlagpunkt (15) beabstandet ist, und wobei der Prozessor (6) konfiguriert ist, um ein Abstandsmesssignal von der Abstandsmesseinrichtung (5) zu empfangen und den Durchmesser auf der Grundlage des gemessenen Abstands (x), der Messrichtung (MD), der Referenzposition (13) und der Messposition (14) zu bestimmen.

2. Messanordnung nach Anspruch 1, wobei die Abstandsmesseinrichtung einen optischen Sensor umfasst.

3. Messanordnung nach Anspruch 2, wobei der optische Sensor ein optischer Triangulationssensor ist.

4. Messanordnung nach einem der Ansprüche 2 oder 3, wobei die Abstandsmesseinrichtung ferner ein Lichtleitfaserbündel umfasst, dessen eines Ende in der Messposition angeordnet ist, um Licht zum und vom optischen Sensor zu leiten.

5. Messanordnung nach einem der vorhergehenden Ansprüche, ferner umfassend eine Anzeige, um einem Benutzer den Durchmesser der Werkstückstruktur und/oder daraus ermittelter Merkmale des Werkstücks oder des Bearbeitungsprozesses anzuzeigen.

6. Messanordnung nach einem der vorhergehenden Ansprüche, ferner umfassend einen Computer, der Teil eines Steuerungssystems eines maschinellen Werkzeugs ist, welches den Betrieb des Schneidwerkzeugs steuert, oder der operativ mit diesem gekoppelt ist.

7. Verfahren zur Bestimmung eines Durchmessers (d) einer Werkstückstruktur (4) mit einer zentralen Achse (CA) unter Verwendung einer Messanordnung nach einem der vorhergehenden Ansprüche, wobei das Verfahren die folgenden Schritte umfasst:

- Anordnen des Schneidwerkzeugs (2) in einer Referenzposition (13), in der eine Schneidkante, die geeignet ist, die Werkstückstruktur zu berühren, sich in einer bekannten Position in Bezug auf einen Anschlagpunkt (15) auf einer Oberfläche der Werkstückstruktur befindet,
- Messen des Abstands (x) entlang einer Messrichtung (MD) von einer Messposition (14) zu einem Messpunkt (16) auf der Oberfläche, wobei sich die Messposition an dem Schneidwerkzeug befindet und an einer bekannten Position in Bezug auf die Schneidkante festgelegt ist, und wobei der Messpunkt (16) in einer Umfangsrichtung der Oberfläche von dem Anschlagpunkt (15) beabstandet ist,
- Ermitteln des Durchmessers (d) der Werkstückstruktur (4) in einem durch den Messpunkt (16) senkrecht zur Mittelachse (CA) verlaufenden Querschnitt, wobei der Durchmesser (d) anhand des gemessenen Abstands (x), der Messrichtung (MD), der Referenzposition (13) und der Messposition (14) bestimmt wird.

**8.** Verfahren nach Anspruch 7, wobei der Abstand während der Bewegung des Schneidwerkzeugs in Bezug auf die Oberfläche der Werkstückstruktur kontinuierlich oder wiederholt gemessen wird, und wobei der Durchmesser in Bezug auf jeden der gemessenen Abstände oder einen Teilsatz der gemessenen Abstände bestimmt wird.

**9.** Verfahren nach einem der Ansprüche 7 oder 8, wobei die Referenzposition einer Position entspricht, in der sich die Schneidkante an dem Anschlagpunkt auf der Oberfläche der Werkstückstruktur im Anschlag befindet.

**10.** Verfahren nach Anspruch 7 oder 8, wobei die Referenzposition einer zurückgezogenen Position des Schneidwerkzeugs entspricht, in der das Schneidwerkzeug um eine Rückzugsdistanz von einer Position zurückgezogen wurde, in der die Schneidkante an der Oberfläche der Werkstückstruktur im Anschlag war.

**11.** Verfahren nach Anspruch 10, wobei der Abstand in einer Zeitspanne zwischen zwei aufeinanderfolgenden Schneidvorgängen an der Werkstückstruktur gemessen wird.

**12.** Verfahren nach einem der Ansprüche 7-11, wobei der Abstand gemessen wird, wenn die Werkstückstruktur um die Mittelachse rotiert.

**13.** Verfahren nach Anspruch 12, mit einem Schritt, bei dem während der Rotation der Werkstückstruktur aus einer Vielzahl von Durchmesserwerten ein Taumeln der Werkstückstruktur und/oder Vibrationen bestimmt werden.

**14.** Computerprogramm mit von einem Computer ausführbaren Befehlen, welches bei Ausführung durch den Computer der Messanordnung nach Anspruch 6 dazu führt, das ein Verfahren nach einem der Ansprüche 7-13 ausgeführt wird.

**Revendications**

**1.** Agencement de mesure (1) destiné à déterminer un diamètre (d) d'une structure de pièce d'ouvrage (4) présentant un axe central (CA), l'agencement de mesure comprenant

- un outil de coupe (2) incluant une arête de coupe conçue pour être au contact de la structure de pièce d'ouvrage,
- un dispositif de mesure de distance (5) agencé sur l'outil de coupe afin de mesurer une distance (x) jusqu'à un point de mesure (16) sur une surface de la structure de pièce d'ouvrage (4), et
- un processeur (6) couplé de manière opérationnelle au dispositif de mesure de distance (5) afin de déterminer le diamètre (d) de la structure de pièce d'ouvrage (4) dans une section transversale qui passe par le point de mesure (16) et est perpendiculaire à l'axe central (CA),

où l'outil de coupe (2) peut être agencé à une position de référence (13) dans laquelle l'arête de coupe est située à une position connue par rapport à un point d'engagement (15) sur la surface de la structure de pièce d'ouvrage (4), et le dispositif de mesure de distance (5) est configuré pour mesurer la distance (x) le long d'une direction de mesure (MD) entre une position de mesure (14) et le point de mesure (16) sur la surface, **caractérisé en ce que** le point de mesure (16) est distant du point d'engagement (15) dans une direction circonférentielle de la surface, et où le processeur (6) est configuré pour recevoir un signal de mesure de distance émanant du dispositif de mesure de distance (5) et déterminer le diamètre sur la base de la distance mesurée (x), de la direction de mesure (MD), de la position de référence (13) et de la position de mesure (14).

**2.** Agencement de mesure selon la revendication 1, dans lequel le dispositif de mesure de distance comprend un capteur optique.

**3.** Agencement de mesure selon la revendication 2, dans lequel le capteur optique est un capteur de triangulation optique.

**4.** Agencement de mesure selon l'une quelconque des revendications 2 ou 3, dans lequel le dispositif de mesure de distance comprend en outre un faisceau de fibres optiques dont une extrémité est agencée au niveau de la position de mesure afin d'acheminer de la lumière vers et depuis le capteur optique.

5. Agencement de mesure selon l'une quelconque des revendications précédentes, comprenant en outre un dispositif d'affichage afin d'indiquer à un utilisateur le diamètre de la structure de pièce d'ouvrage et/ou des caractéristiques de la pièce d'ouvrage ou du processus d'usinage déterminées à partir de celui-ci.

6. Agencement de mesure selon l'une quelconque des revendications précédentes, comprenant en outre un ordinateur qui fait partie d'un, ou est couplée de manière opérationnelle à un, système de commande d'une machine-outil qui commande le fonctionnement de l'outil de coupe.

7. Procédé destiné à déterminer un diamètre (d) d'une structure de pièce d'ouvrage (4) présentant un axe central (CA), au moyen d'un agencement de mesure tel que défini selon l'une quelconque des revendications précédentes, le procédé comprenant les étapes consistant à :

    - agencer l'outil de coupe (2) à une position de référence (13) dans laquelle une arête de coupe, conçue pour être au contact de la structure de pièce d'ouvrage, de l'outil de coupe est située à une position connue par rapport à un point d'engagement (15) sur une surface de la structure de pièce d'ouvrage,
    - mesurer la distance (x) le long d'une direction de mesure (MD) entre une position de mesure (14) et un point de mesure (16) sur la surface, où la position de mesure est située au niveau de l'outil de coupe et est fixée à une position connue par rapport à l'arête de coupe, et où le point de mesure (16) est distant du point d'engagement (15) dans une direction circonférentielle de la surface,
    - déterminer le diamètre (d) de la structure de pièce d'ouvrage (4) dans une section transversale passant par le point de mesure (16) perpendiculaire à l'axe central (CA), où le diamètre (d) est déterminé sur la base de la distance mesurée (x), de la direction de mesure (MD), de la position de référence (13) et de la position de mesure (14).

8. Procédé selon la revendication 7, dans lequel la distance est mesurée en continu ou de manière répétée durant un déplacement de l'outil de coupe par rapport à la surface de la structure de pièce d'ouvrage, et le diamètre est déterminé par rapport à chacune des, ou à un sous-ensemble des, distances mesurées.

9. Procédé selon l'une quelconque des revendications 7 ou 8, dans lequel la position de référence correspond à une position dans laquelle l'arête de coupe est en engagement avec le point d'engagement sur la surface de la structure de pièce d'ouvrage.

10. Procédé selon la revendication 7 ou 8, dans lequel la position de référence correspond à une position rétractée de l'outil de coupe, dans laquelle l'outil de coupe a été rétracté d'une certaine distance de rétractation par rapport à une position dans laquelle l'arête de coupe était en engagement avec la surface de la structure de pièce d'ouvrage.

11. Procédé selon la revendication 10, dans lequel la distance est mesurée sur une période entre deux opérations de coupe consécutives sur la structure de pièce d'ouvrage.

12. Procédé selon l'une quelconque des revendications 7 à 11, dans lequel la distance est mesurée lorsque la structure de pièce d'ouvrage tourne autour de l'axe central.

13. Procédé selon la revendication 12, comprenant l'étape consistant à déterminer une rotation déséquilibrée de la structure de pièce d'ouvrage et/ou des vibrations à partir d'une pluralité de valeurs de diamètre déterminées durant une rotation de la structure de pièce d'ouvrage.

14. Programme informatique comprenant des instructions exécutables par ordinateur lequel, lorsqu'il est exécuté par l'ordinateur de l'agencement de mesure selon la revendication 6, permet de réaliser le procédé selon l'une quelconque des revendications 7 à 13.

**Fig. 1**

**Fig. 2**

**Fig. 3A**

**Fig. 3B**

**Fig. 3C**

**Fig. 3D**

**Fig. 4**

**EP 3 686 548 B1**

## REFERENCES CITED IN THE DESCRIPTION

**Patent documents cited in the description**

- EP 1292805 A
- US 3491627 A
- JP H0523952 A
- JP 2014008588 A